# EUROPÄISCHE PATENTSCHRIFT

(11) **EP 3 092 206 B1**
(45) Veröffentlichungstag und Bekanntmachung des Hinweises auf die Patenterteilung: **03.07.2019**
(21) Anmeldenummer: 14805279.8
(22) Anmeldetag: 28.11.2014
(51) Int. Cl.: C04B 14/20, C04B 28/04, C04B 28/06, C04B 28/16, C04B 40/00, C04B 26/14, C04B 26/16

(54) **ZUSATZSTOFFGEMISCH ZUR ZUGABE IN EIN BELAGSBAUSTOFFGEMISCH UND DARAUS GEBILDETES VERBUNDBELAGSSYSTEM**
ADDITIVE MIXTURE FOR ADDITION TO A BUILDING MATERIAL COVERING MIXTURE AND COMPOSITE COVERING SYSTEM FORMED THEREFROM
MÉLANGE D'ADDITIFS DESTINÉ À ÊTRE AJOUTÉ À UN MÉLANGE DE MATÉRIAUX DE REVÊTEMENT ET SYSTÈME DE REVÊTEMENT COMPOSITE FORMÉ À PARTIR DE CE MÉLANGE

(30) Priorität: 10.01.2014 CH 25142014
(43) Veröffentlichungstag der Anmeldung: 16.11.2016
(73) Patentinhaber: Synfola GmbH, 8806 Bäch (CH)
(72) Erfinder: HAUSER, Kaspar, 8806 Bäch (CH)
(74) Vertreter: Schneider Feldmann AG Patent- und Markenanwälte
(86) Internationale Anmeldenummer: PCT/EP2014/075976
(87) Internationale Veröffentlichungsnummer: WO 2015/104096

(56) Entgegenhaltungen:
- EP-A1- 0 879 805
- AT-B- 230 260
- DE-A1-102008 001 808
- DE-T2- 69 804 134

## Beschreibung

### Technisches Gebiet

Die vorliegende Erfindung beschreibt ein Zusatzstoffgemisch zur Zugabe in ein Belagsbaustoffgemisch zur Bildung eines Verbundbelagssystems für den Boden-, Wand- oder Fassadenbereich, wobei das Zusatzstoffgemisch einen Anteil zwischen 50 Gew.% und 95 Gew.% Muskovit-Glimmer umfasst und das Zusatzstoffgemisch in Pulver- oder Granulatform vorliegt, ein Verbundbelagssystem für den Boden-, Wand- oder Fassadenbereich, gebildet aus einem fliessfähigen oder spachtelfähigem Belagsbaustoffgemisch, sowie ein Verfahren zur Herstellung eines Verbundbelagssystems für den Boden-, Wand- oder Fassadenbereich, umfassend ein Belagsbaustoffgemisch und ein Zusatzstoffgemisch.

### Stand der Technik

Es sind Baustoffgemische für die Bauindustrie, wie Betonmischungen, Putze und Farben kommerziell erhältlich, welche ein Zusatzstoffgemisch, umfassend einen Anteil von Glimmer oder Mica, meist in Form von Muskovit-Glimmer, aufweisen.

Muskovit-Glimmer weist eine allgemeine chemische Zusammensetzung von KAl₂[(OH,F)₂|AlSi₃O₁₀] auf, kristallisiert in monoklinem oder trigonalem Kristallsystem, ist ein Mineral aus der Mineralklasse der Silikate und Germanate und gehört zu den Schichtsilikaten. Muskovit-Glimmer wird auch Tonerdeglimmer genannt, kommt sehr häufig vor und wird mittels Bergbau aus natürlichen Lagerstätten gewonnen.

Es ist bekannt, dass durch Zugabe einer geringen Menge Muskovit-Glimmers in Putze oder Farben, ein besonderer optischer Eindruck des Verputzes erreicht werden kann. Da der Muskovit-Glimmer ein schuppenförmiges Mineral mit glas- oder perlmuttglänzender Oberfläche ist und meist eine weiss-graue Farbe aufweist, nutzt der Fachmann die Zugabe von geringen Mengen seit längerem zur Erzielung von dekorativen Effekten. Bekannte Baustoffgemische in Form von Verputzen, umfassen Muskovit-Glimmer in Form von Partikeln mit besonders feiner Korngrösse in Mengenanteilen von 0.5 Gew. % bis maximal 1 Gew.%. Bereits derart geringe Mengen des Muskovit-Glimmers führen zur Erzeugung der gewünschten dekorativen Effekte.

Es ist ebenfalls bekannt, dass durch Zugabe von kleinsten Mengen Muskovit-Glimmer in Baustoffgemische, beispielsweise in Form von Beton, eine Form der Armierung erreicht wird. Die Partikel des Muskovit-Glimmers sind wasserunlöslich, chemisch inert und weisen eine lamellare Struktur auf, welche bei der Herstellung und Verarbeitung von Baustoffgemischen erhalten bleibt. Die Rissanfälligkeit in gegossenen Betonbauteilen kann somit durch Zugabe geringer Mengen von Muskovit-Glimmer aufgrund der lamellaren Struktur stark reduziert werden. Aufgrund der Eigenschaften des Muskovit-Glimmers ist bekannt, dass durch Zusatz zu Baustoffgemischen in geringen Mengen von höchstens 1 Gew.% eine geringere Schwindung beim Abbinden des Baustoffgemisches erreichbar ist, womit die Gefahr von Rissbildungen verringert wird.

Aus dem bekannten Stand der Technik geht eine minimale Zugabe von Muskovit-Glimmer hervor, welche kleiner oder gleich 1 Gew.% des Baustoffgemisches ist. Bereits diese geringe Menge Muskovit-Glimmer führt zur den gewünschten mechanischen Eigenschaften und verbesserte das Abbindeverhalten von Baustoffgemischen. Muskovit-Glimmer wird bereits in Anwendungen der Bauindustrie verwendet, was unter anderem aus EP0879805, DE69804134, AT230260 und DE102008001808 hervorgeht. Die resultierenden Zusatzstoffgemische weisen unterschiedliche Stoffmengen und unterschiedliche Korngrössenverteilungen von Muskovit-Glimmer auf, welche nicht zur Lösung der unten aufgeführten Aufgabe führen.

### Darstellung der Erfindung

Die vorliegende Erfindung hat sich zur Aufgabe gestellt die Wärmeleitfähigkeit bzw. Wärmeableitung von Belagssystemen für den Boden-, Wand- oder Fassadenbereich zu verringern. Die Wärmeableitung durch mit den Belagssystemen beschichtete Objekte und Untergründe soll derart verringert werden, dass beim Betreten des mit dem Belagssystem versehenen Untergrundes kein Gefühl kalter Füsse mehr verbunden ist und damit eine höhere Fusstrittwärme erreicht wird.

Durch Einstreuung eines Zusatzstoffgemisches in eine Vergussmasse eines bekannten Belagsbaustoffgemisches bzw. Mischung des Zusatzstoffgemisches mit einem Trockengemisch eines bekannten Belagsbaustoffgemisches wird ein Verbundbelagssystem auf unterschiedlichen Oberflächen und Untergründen gebildet. Nach Trocknung bzw. Abbinden entsteht so ein Verbundbelagssystem, welches die Wärmeableitung durch das damit beschichtete Objekt vor allem in Richtung zur Normalen der mit dem Verbundbelagssystem beschichteten Oberfläche stark reduziert. Beim Berühren oder Begehen der Oberfläche des Untergrundes mit dem Verbundbelagssystem neigt eine Person weniger zu kalten Händen oder Füssen. Dieser Effekt einer verringerten Wärmeableitung durch das Verbundbelagssystem ist nicht nur subjektiv fühlbar, sondern auch durch Wärmeableitmessungen objektiv gemessen worden.

Die gestellte Aufgabe wird dadurch gelöst, dass dem Baustoffgemisch ein Zusatzstoff, umfassend einen hohen Anteil von Muskovit-Glimmer zugesetzt wird bzw. eingestreut wird, bevor das Verbundbelagssystem abbindet und damit ausgebildet ist.

Bevorzugt wird die Aufgabe dadurch gelöst, dass der Zusatzstoff einen Anteil von Muskovit-Glimmer zwischen 60 Gew.% und 95 Gew.% umfasst. Eine Menge von mindestens 5 Gew.% des Muskovit-Glimmers bis zu 50 Gew.% innerhalb des resultierenden Verbundbelagssystems hat zu gewünschten Ergebnissen geführt, welche die Wärmeabgabe messbar beeinflusst haben.

### Kurze Beschreibung der Zeichnungen

Der Erfindungsgegenstand wird nachstehend beschrieben, wobei zur Verdeutlichung der gemessenen Wärmeleitungseigenschaften bzw. Wärmeableiteigenschaften durch unterschiedliche Verbundbelagssysteme die anliegenden Zeichnungen verwendet werden.
- Figur 1: zeigt ein Diagramm der Abkühlung eines Kupferblockes während der Wärmeabgabe gegen die Zeit an vier Verbundbelagssystemen, gemessen mit der von der EMPA Dübendorf eingeführten Messmethode nach Norm SIA 252.
- Figur 2: zeigt die aufgenommenen Messwerte bei der Abkühlung eines Kupferblockes unter Wärmeabgabe an einen Prüfkörper mit einem Verbundbelagssystem umfassend eine Industrie Epoxidharzbeschichtung mit eingestreutem Zusatzstoffgemisch im Messzeitraum von 30 Minuten.

### Beschreibung

Im Folgenden wird ein Zusatzstoffgemisch auf mineralischer Basis beschrieben, welches mit einem bekannten kommerziell erhältlichen Belagsbaustoffgemisch ein Verbundbelagssystem bildet.

Dieses Zusatzstoffgemisch wird unter dem Markennamen ISOPOWDER des Anmelders in verschiedenen Rezepturen vertrieben. Die jeweils zu verwendende Rezeptur und damit die Zusammensetzung des Zusatzstoffgemisches richtet sich nach dem gewählten Belagsbaustoffgemisch in welches das Zusatzstoffgemisch eingemischt bzw. eingestreut werden soll.

Das Verbundbelagssystem wird auf unterschiedliche Oberflächen von Objekten und damit auf verschiedenen Untergründen, Nutzflächen oder Industrieflächen in Form von Böden, Wänden, Decken oder Fassaden aufgebracht. Während das reine Belagsbaustoffgemisch keine oder nur minimale Wärmeisolationseigenschaften aufweist, werden die Wärmeleitungseigenschaften des resultierenden Verbundbelagssystems durch Zufügung des Zusatzstoffgemisches stark verändert. Die resultierende Dicke des Verbundbelagssystems liegt im Bereich einiger Millimeter.

Einsetzbare Belagsbaustoffgemische zur Bildung von gewünschten Verbundbelagssystemen auf einer bestehenden entsprechend vorbereiteten Oberfläche, fallen unter die SIA 252, eine eingetragene Norm der schweizerischen Normen-Vereinigung auf dem Gebiet des Bauwesens. Diese Belagsbaustoffgemische können nach Zugabe des Zusatzstoffes Verbundbelagssysteme in Form von fugenlosen Industriebodenbelägen bilden. Als Belagsbaustoffgemische sind mineralische Beläge einsetzbar, wie Hartbetonbeläge, Zement-Kunstharz-Beläge, Vermörtelungsbeläge, Steinholzbeläge, Magnesiabeläge oder Anhydrit-Beläge, welche aus Wasser, Sandkies und einem Anhydrit-Binder gebildet werden.

Als weitere Belagsbaustoffgemische können Kunstharz-Beläge oder Kunststoffe aufweisende Beläge eingesetzt werden, welche in der Regel in dünneren Schichten auf den Untergrund aufgetragen werden. Die Auftragung des reinen Belagsbaustoffgemisches bzw. des mit dem Zusatzstoffgemisches vermischten Belagsbaustoffgemisches erfolgt in wenigstens einem Arbeitsgang.

Bei unserer Verwendung in Dünnschichtsystemen liegen die Mengen des Zusatzstoffgemisches bei 7 Gew.% bis 20 Gew.% der Menge des Belagsbaustoffgemisches für mineralische Beschichtungen und bei Industrie - PU und Epoxidharzsystemen sogar bei 40 Gew.% bis 50 Gew. % der Menge des Belagsbaustoffgemisches für eine Einstreuschicht.

### Trockengemisch

Zum einen kann vor der Auftragung ein Trockengemisch in Pulver- oder Granulatform, umfassend das Belagsbaustoffgemisch und das Zusatzstoffgemisch durch Mischung erstellt werden. Dieses Trockengemisch kann dann durch Mischung mit Anmachwasser und Additiven zu einer Vergussmasse vermischt werden, welche spachtel- oder giessfähig ist. Diese Vergussmasse wird dann auf den Untergrund in der gewünschten Schichtdicke aufgebracht. Nach der Trocknung bzw. dem Abbinden können weiter Schichten, beispielsweise mindestens eine Versiegelungsschicht aufgetragen werden.

### Einstreuung in Vergussmasse

Werden aber Belagsbaustoffgemische in Form von Kunststoff- oder Kunstharzbelägen, beispielsweise ein Polyurethanbelag oder ein Epoxidharzbelag verwendet, dann kann das Zusatzstoffgemisch auch nachträglich eingestreut werden. Nach Ausbringung und Verstreichen und/oder Verspachteln des Belagsbaustoffgemisches wird eine gewünschte Menge des Zusatzstoffgemisches in das Belagsbaustoffgemisch eingestreut, sodass die Mischung des Zusatzstoffgemisches mit dem Belagsbaustoffgemisch erst nach der Ausbringung des Belagsbaustoffgemisches stattfindet.

Die Vergussmasse, umfassend Belagsbaustoffgemisch oder Belagsbaustoffgemisch und Zusatzstoffgemisch ist einfach und schnell in einem Arbeitsgang einschichtig und fugenlos aufbringbar. Das resultierende Verbundbelagssystem weist eine ausreichend hohe Druckfestigkeit und Zugbelastbarkeit auf und die Ableitung von Wärme vom Untergrund, die Wärmeableitung, ist durch die Zugabe des Zusatzstoffgemisches wunschgemäss verringert.

### Definition des Zusatzstoffes

Die Hauptkomponente des Zusatzstoffgemisches ist Muskovit-Glimmer, welcher in Pulver- oder Granulatform mit einem Anteil von 50 Gew.% bis 95 Gew.% im Zusatzstoffgemisch vorliegt.

Der Anteil des Muskovit-Glimmers muss in verschiedenen Körnungen vorliegen. Es hat sich herausgestellt, dass sich bei Verwendung von mindestens zwei Mengen unterschiedlicher Körnungen gute Wärmeableitwerte des resultierenden Verbundbelagssystems einstellen. Je nach verwendetem Belagsbaustoffgemisch sollte sich der Anteil des Muskovit-Glimmers aus Partikeln mit feiner Korngrösse, grösser 150 µm und kleiner 300 µm, mit mittelfeiner Korngrösse grösser 400 µm und kleiner 800 µm und/oder grober Korngrösse mit Partikelgrössen grössergleich 800 µm zusammensetzen. Es wurden gute Ergebnisse bei Verwendung von Muskovit-Glimmer MU in Form von MU85 (mittlere Partikelgrösse > 160 µm), MU450 (> 630 µm) und MU800 (> 800 µm) erreicht. Die Korngrösse wird dabei durch Ermittlung des mittleren Partikeldurchmessers in Rasterelektronenmikroskopbildern einer Stichprobe des jeweiligen Muskovit-Glimmers bestimmt.

Ein Zusatzstoffgemisch mit Muskovit-Glimmer in Form eines Teils feiner Korngrösse und eines Teils mittelfeiner Korngrösse hat zu guten Ergebnissen geführt.
Auch die Beimischung eines zusätzlichen Teils Muskovit-Glimmers mit grober Korngrösse hat zu guten Ergebnissen mit gewünschten thermodynamischen Eigenschaften geführt.

Wie Versuche gezeigt haben, konnten mit einem Zusatzstoffgemisch mit einem Anteil Muskovit-Glimmer mit grober und mittelfeiner Korngrösse, sowie mit einem Zusatzstoffgemisch mit einem Anteil Muskovit-Glimmer mit grober und feiner Korngrösse gewünschte thermodynamische Eigenschaften der resultierenden Verbundbelagssysteme erreicht werden.

Durch die Beisetzung des Zusatzstoffgemisches, umfassend Muskovit-Glimmer in hohen Konzentrationen, kann ein Verbundbelagssystem erreicht werden, welches eine ähnliche Fusstrittwärme wie bei einem Steinholzbelag aufweist. Als Fusstrittwärme wird hier eine derart verringerte Wärmeleitfähigkeit bezeichnet, sodass man beim Begehen des Verbundbelagssystems keine kalten Füsse bekommt.

Durch die unterschiedlichen Rezepturen des Zusatzstoffgemisches selbst bzw. des Mengenanteils des Zusatzstoffgemisches im Belagsbaustoffgemisch können nun auch Hartbetonböden, Anhydrit, PU, Epoxidharzbeläge und andere Beläge mit einer gewünschten Fusstrittwärme erreicht werden.

Gleichzeitig müssen mit den nachfolgenden Komponenten die durch den hohen Anteil Muskovit-Glimmer veränderten Belagsbaustoffgemische wieder angepasst werden, um die Verlaufseigenschaften, Verarbeitbarkeit wie auch den Bindemittelanteil, Entmischung etc. wieder herzustellen. Darum ist es wichtig, dass jedes kommerziell erhältliche Belagsbaustoffgemisch mit einer abgestimmten Rezeptur des ISOPOWDER Zusatzstoffgemisches und einem abgestimmten Mengenverhältnis gemischt wird, um die gewünschte Fusstrittwärme zu erreichen und gleichzeitig auch die Verarbeitungs- und Einbaunormen für das gesamte Verbundbelagssystem zu erfüllen.

### Optionale Komponenten

Um die Verarbeitungseigenschaften sowie die mechanische Festigkeit des Belagsbaustoffgemisches, welches mit dem Zusatzstoffgemisch vermischt wird, zur erhalten bzw. wieder herzustellen, werden dem Zusatzstoffgemisch unterschiedliche Additive beigegeben.

Als Additiv wird mindestens ein Verlaufsoptimierer, auch Superplasticizer genannt, ein Stabilisierer gegen Entmischung, mindestens ein Bindemittel, beispielsweise ein Portlandzement, ein Füll- und Bindemittel, beispielsweise Calciumcarbonat, eine Brandschutzkomponente, ein Beschichtungsstabilisierer und/oder ein Weisspigment dem Zusatzstoffgemisch beigesetzt. Je nach gewünschtem Zusatzstoffgemisch, welches auf das Belagsbaustoffgemisch abgestimmt ist, werden unterschiedliche Konzentrationen der Addtive gewählt, wodurch verschiedene Rezepturen des Zusatzstoffgemisches resultieren.

Als Verlaufsoptimierer, wurde Melflux® 2651 F zum Teil auch in einer Überdosierung verwendet um den Verlauf einer Beschichtung oder eines Verlauf-Mörtels wieder zu gewährleisten. Bei Hartbetonbeschichtungen wird dadurch auch die gleichmässige Verteilung von Sand, Zement, ISOPOWDER etc. verbessert und die Verarbeitbarkeit vereinfacht.

Starvis 3003 F wurde als Stabilisierer dem Zusatzstoffgemisch beigemischt, um die Entmischung bei zu hohem Wassergehalt zu steuern. Auch bei diesem Produkt wird teilweise überdosiert, da die Hauptkomponente Muskovit-Glimmer des Zusatzstoffgemisches sehr saugfähig ist und sich wie ein Wasserspeicher verhält. Diese Eigenschaft ist aber auch sehr wirksam, da vor allem bei Hartbetonbelägen eine langsame Feuchtigkeitsabgabe einer Rissbildung entgegenwirkt.

Als Bindemittel wurde weisser Portlandzement (EN 197-1 - CEM I 52.5 N (sw)) vor allem in zementösen mineralischen Beschichtungen eingesetzt, die einen sehr hohen Reinheitsgehalt haben, wodurch der durch die hohe Zugabe von ISOPOWDER fehlende Bindemittelanteil zugefügt wird.

Auch der Einsatz von Portlandzement CEM I 42.5 R als Bindemittel wurde probiert und für Hartbetonbeläge und Beschichtungsprodukte eingesetzt, die qualitätsmassig keinen Weiss-Zementanteil erfordern. Hier ersetzt dieser auch den durch die hohe Zugabe von ISOPOWDER fehlenden Bindemittelanteil.

Als Füll- und Bindemittel wurde Minema 60/10, ein Calciumcarbonat verwendet, das in den uns bekannten mineralischen Beschichtungen eingesetzt wird oder mit anderen Beschichtungen verträglich ist und als Ergänzung durch die hohe Zumischung von ISOPOWDER beigegeben werden muss, um das Saugverhalten (Atmungsaktivität) wie auch den Härtegrad auszugleichen. Es dient ausserdem auch als Füllmittel, welcher vor allem in mineralischen Beschichtungen teilweise sehr knapp bemessen.

Als Brandschutzkomponente wurde in den Versuchen APYRAL 24 eingesetzt, welches die Brennbarkeit des Verbundbelagssystems minimiert. Mit APYRAL 24 wird der geforderte Ausgleich wieder hergestellt, damit die entsprechenden Produkte wie zum Beispiel STO Creativ Mineral die Brandklassezertifizierung nicht verlieren, obwohl das Zusatzstoffgemisch nicht brennbar ist.

Als Beschichtungsstabilisierer wurde Quarz SIHELCO 35 eingesetzt, welches ein sehr reines und hochwertiges Quarz ist, dass ausgewählt wurde, weil dies in verschiedenen mineralischen Beschichtungen und Verlaufsmörtel verträglich und einsetzbar ist. Damit kann bei einer Dosierung von 5% bis 20% mit nur einer Quarzsorte der Ausgleich geschaffen werden um die gewohnte Verarbeitung, Optik sowie auch die Festigkeit des Verbundbelagssystems zur erreichen.

Als Weisspigment wurde Titandioxid (Pretiox) verwendet.

### Zusatzstoff in möglichen Konzentrationen

Der Glimmer-Muskovit Anteil des Zusatzstoffgemisches lag in den Versuchen zwischen minimalen Wert A in Gewichtsprozent und maximalen Wert B in Gewichtsprozent der Gesamtmasse des Zusatzstoffgemisches.

| **A Gew.%** | **B Gew.%** | **Komponente** |
|---|---|---|
| **10** | **90** | **MICA-MU 800 (Glimmer grob)** |
| **30** | **90** | **MICA-MU 450 (Glimmer mittelfein)** |
| **10** | **50** | **MICA-MU 85 (Glimmer fein)** |

Die verwendeten Additive wurden in Mengen relativ zur Gesamtmasse des Zusatzstoffgemisches zwischen A und B gemäss folgender Tabelle eingesetzt, wobei gute Ergebnisse erreicht wurden.

| **A Gew.%** | **B Gew.%** | **Komponente** |
|---|---|---|
| 0.05 | 3 | Verlaufsoptimierer: |
| | | Melflux® 2651 F (Superplasticizer) |
| 0.05 | 0.3 | Stabilisierer gegen Entmischung: |
| | | Starvis 3003 F |
| 6 | 30 | Bindemittel: |
| | | Weisser Portlandzement EN 197-1 - CEM I 52.5 N (sw) |
| 6 | 30 | Bindemittel: |
| | | Portland Cement (CEM I 42.5 R) |
| 4.00 | 15.00 | Brandschutzkomponente: |
| | | APYRAL 24 |
| 5 | 20 | Beschichtungsstabilisierer: |
| | | Quarz SIHELCO 35 |
| 0.5 | 4 | Weisspigment: |
| | | Titandioxid Pretiox |
| 2 | 10 | Füll- und Bindemittel: |
| | | Minema 60/10 Calsiumcarbonat |

### Rezepturbeispiel 1

Zur Herstellung eines ersten Verbundbelagssystems wurde eine selbstverlaufende Spachtelmasse von BASF als Belagsbaustoffgemisch mit der folgenden Zusammensetzung verwendet:

| Gew. % | Komponente |
|---|---|
| **18.5** | Ordinary Portland Cement (CEM I 42.5 R) |
| **11.5** | Calcium Aluminate Cement (40 % Al2O3) |
| **6.5** | Calcium Sulphate (Synthetic Anhydrite) |
| **41.35** | Quartz Sand (0.1 - 0.3 mm) |
| **19.4** | Limestone Powder (10 - 20 µm) |
| **2** | Redispersible Latex Powder |
| **0.2** | Citric Acid various |
| **0.1** | Lithium Carbonate (Accelerator) |
| **0.2** | Melflux® 2651 F (Superplasticizer) |
| **0.1** | Starvis® 3003 F (Stabilizer) |
| **0.15** | Vinapor® DF 9010 F (Defoamer powder) |

Dieses Belagsbaustoffgemisch wurde mit einem Zusatzstoffgemisch in der folgenden Zusammensetzung vermischt:

| **Gew.%** | Komponente |
|---|---|
| 0.26 | Melflux® 2651 F (Superplasticizer) für Verlaufsoptimierung |
| 0.14 | Starvis 3003 F Stabilisierer gegen Entmischung |
| 16 | Portland Cement (CEM I 42.5 R) |
| **48** | **MICA-MU 450 (Glimmer mittelfein)** |
| **35.6** | **MICA-MU 85 (Glimmer fein)** |

Das Zusatzstoffgemisch weist hier jeweils Muskovit-Glimmer mit zwei verschiedenen Korngrössen auf.

Dieses erste Verbundbelagssystem wurden in zwei Ausführungen hergestellt, wobei in einem ersten Test I) 10 Gew.% (800g Belagsbaustoffgemisch, 80g Zusatzstoffgemisch 2', 193.6g Wasser) und im zweiten Test II) 15 Gew.% (800g Belagsbaustoffgemisch, 120g Zusatzstoffgemisch, 202.4g Wasser) Zusatzstoffgemisch mit dem Belagsbaustoffgemisch als mineralischem Belag (BASF Mischung) vermischt wurden und zusätzliches Anmachwasser hinzugefügt wurde. Die resultierenden Verlaufseigenschaften, die Optik sowie die Wärmeleiteigenschaften des Verbundbelagssystems waren wunschgemäss.

### Rezepturbeispiel 2

Einem zweiten mineralischem Belagsbaustoffgemisch, welches unter dem Namen "Sto Creativ Mineral" vertrieben wird, wurde ein Zusatzstoffgemisch in folgender Zusammensetzung beigemischt:

| **Gew.%** | Komponente |
|---|---|
| 0.16 | Melflux® 2651 F (Superplasticizer) für Verlaufsoptimierung |
| 0.14 | Starvis 3003 F Stabilisierer gegen Entmischung |
| 12.00 | weisser Portlandzement EN 197-1 - CEM I 52.5 N (sw) Bindemittel |
| **10.00** | **MICA-MU 800 (Glimmer grob)** |
| **45.00** | **MICA-MU 450 (Glimmer mittel)** |
| **18.00** | **MICA-MU 85 (Glimmer fein)** |
| 2.00 | Titandioxid Pretiox für eine reinere Optik |
| 5.70 | APYRAL 24 um die Brennbarkeit zu minimieren |
| 7.00 | Quarz SIHELCO 35 für die Stabilisierung der Beschichtung |

Hier weist der Anteil Muskovit-Glimmer drei unterschiedliche Korngrössen auf.
Insgesamt wurden 3 Kg des Zusatzstoffes mit 15 Kg des "Sto Creativ Mineral" Belagsbaustoffgemisches vermischt und mit zusätzlichem Anmachwasser versetzt. Damit betrug die Menge des Zusatzstoffgemisches 20% der Masse des Belagsbaustoffgemisches, sodass das Mischungsverhältnis entsprechend 1 Teil Zusatzstoffgemisch zu 5 Teilen Belagsbaustoffgemisch war.

### Rezepturbeispiel 3

Einem Belagsbaustoffgemisch in Form einer Industrie Hartbetonbeschichtung wurde ein Zusatzstoffgemisch gemäss der folgenden Zusammensetzung beigemischt:

| **Gew.%** | Komponente |
|---|---|
| 0.1 | Starvis 3003 F Stabilisierer gegen Entmischung |
| 15.0 | Portland Cement (CEM I 42.5 R) |
| **49.90** | **MICA-MU 800 (Glimmer grob)** |
| **20.0** | **MICA-MU 450 (Glimmer mittel)** |
| **15.0** | **MICA-MU 85 (Glimmer fein)** |

Auch hier weist das Zusatzstoffgemisch jeweils drei unterschiedliche Korngrössen auf.

### Thermodynamisch geprüfte Versuchsreihen

Verschiedene Verbundbelagssysteme sind jeweils auf einem quadratischen Betonblock mit 400 mm Seitenlänge und einer Dicke von 120 mm aufgebracht. Vor Durchführung der Wärmeableitmessungen waren die Verbundbelagssysteme vollständig ausgehärtet und trocken. Es wurden jeweils zwei Prüfkörper (P1, P2) mit einem identischen Verbundbelagssystem versehen. Vor Durchführung der Wärmeableitung wurden die Prüfkörper jeweils 48 Stunden bei einer konstanten Temperatur von 20°C gelagert. Die Wärmeableitung wurde an beiden Prüfkörpern unter gleichen Bedingungen jeweils in zwei Durchgängen gemessen und ein Mittelwert der gemessenen Wärmeableitung beider Prüfkörper ermittelt. Da jeweils zwei Messungen pro Prüfkörper durchgeführt wurden, wurden Mittelwerte von vier Messungen 1AP1, 1AP2, 1BP1, 1BP2 ermittelt.
Zur Messung der Wärmeableitung und damit der Wärmeleitung senkrecht durch den Prüfkörper mit an der Oberfläche aufgebrachtem Verbundbelagssystem, wird ein auf 52°C vorgeheizter zylinderförmiger Kupferblock mit einem Durchmesser von 120mm und einer stirnseitigen Berührungsfläche von 113cm2 eingesetzt. Der zylinderförmige Kupferblock ist entlang der Umfangsfläche und an der dem Prüfkörper abgewandten Stirnseite wärmeisoliert. Damit kann Wärmeenergie vom Kupferblock nur durch die stirnseitige Berührungsfläche, mit welcher der Kupferblock auf das Verbundbelagssystem des Prüfkörpers aufgesetzt wird, übertragen bzw. geleitet werden. Der Temperaturverlust wurde nach Aufsetzen des Kupferblockes auf den Prüfkörper innerhalb von 30 Minuten ermittelt.

Um den, durch Wärmeabgabe des Kupferblockes an die Umgebung auftretenden Fehler zu minimieren, wurde eine Kontrollmessung durchgeführt. Dabei wurde der Kupferblock von 20°C auf 50°C aufgeheizt, anschliessend auf eine 100 mm dicke Dämmstoffplatte aus Polystyrol aufgesetzt und der Temperaturverlust des Kupferblockes innerhalb von 30 Minuten gemessen. Bei dieser Messung kann die Wärmeenergie nicht durch die stirnseitige Berührungsfläche wandern, da die Dämmstoffplatte auf 50°C geheizt ist. Darum wird hier der Wärmeverlust durch die anderen Wände durch Ermittlung einer Heizblockverlusttemperatur bestimmt. Der zu den bestimmten Zeiten gemessene Heizblockverlust wurde vom Mittelwert der Temperaturmessungen beim Auskühlen der Prüfkörper abgezogen, sodass korrigierte Temperaturmittelwerte (Mittel korrigiert) der vier Messungen an den jeweils zwei Prüfkörpern resultierten.

### Prüfkörper 1A/1B

Die Wärmeableitung eines ersten Prüfkörpers 1A und eines zweiten Prüfkörpers 1B, umfassend ein Verbundbelagssystem mit einer eine Schichtdicke von 40 mm auf der Oberfläche des Prüfkörpers, wurde jeweils zweimal gemessen. Das Verbundbelagssystem umfasste ein Belagsbaustoffgemisch in Form eines Industrie Hartbetonbelags (411 Kg) und beigemischtes Zusatzstoffgemisch (30 Kg), sowie weitere Additive. Der Mengenanteil des Zusatzstoffgemisches lag bei etwa 7% der Masse des Belagsbaustoffgemisches in Form des Industrie Hartbetonbelags. Das Belagsbaustoffgemisch und das beigemischte Zusatzstoffgemisch war eine Trockenmischung, welche mit Anmachwasser und Additiven vermischt wurde. Die gemessenen, gemittelten und korrigierten Mittelwerte sind in Tabelle 1 aufgeführt.

**Tabelle 1**

| | **Temperaturverlust** | | | | | **Heizblock-verlust [K]** | **Mittel korrigiert [K]** | **Wärme-ableitung [kJ]** |
|---|---|---|---|---|---|---|---|---|
| **min** | **1A P1 [K]** | **1A P2 [K]** | **1B P1 [K]** | **1B P2 [K]** | **Mittel [K]** | | | |
| 1 | 0.3 | 1.1 | 1.8 | 2.0 | 1.30 | 0.05 | 1.25 | 3.75 |
| 2 | 0.6 | 1.3 | 2.1 | 2.5 | 1.63 | 0.10 | 1.52 | 4.57 |
| 5 | 1.1 | 1.8 | 2.7 | 3.6 | 2.30 | 0.26 | 2.04 | 6.13 |
| 7 | 1.5 | 2.1 | 3.1 | 4.1 | 2.70 | 0.36 | 2.34 | 7.02 |
| 10 | 2.2 | 2.6 | 3.7 | 4.7 | 3.30 | 0.51 | 2.79 | 8.36 |
| 15 | 3.1 | 3.6 | 4.7 | 5.8 | 4.30 | 0.77 | 3.53 | 10.60 |
| 20 | 4.1 | 4.5 | 5.8 | 6.7 | 5.28 | 1.02 | 4.25 | 12.75 |
| 25 | 5.1 | 5.4 | 6.6 | 7.5 | 6.15 | 1.28 | 4.87 | 14.61 |
| 30 | 5.8 | 6.2 | 7.4 | 8.3 | 6.93 | 1.54 | 5.39 | 16.17 |

### Prüfkörper 2A/2B

Die Wärmeableitung eines ersten Prüfkörpers 2A und eines zweiten Prüfkörpers 2B, auf welchen jeweils ein Belagsbaustoffgemisch in Form einer Industrie Epoxidharzbeschichtung mit einer Einstreuung des Zusatzstoffgemisches mit einer Gesamtdicke von 3 mm angeordnet war, wurde in einer weiteren Testreihe bestimmt. Auf das aufgebrachte Belagsbaustoffgemisch in Form der Industrie Epoxidharzbeschichtung wurde das Zusatzstoffgemisch im Mengenverhältnis 1:1 zur Epoxidharzbeschichtung gestreut. Anschliessend wurde eine Versiegelung angebracht. Die gemessenen, gemittelten und korrigierten Mittelwerte sind in Tabelle 2 aufgeführt.

**Tabelle 2**

| | **Temperaturverlust** | | | | | **Heizblock-verlust [K]** | **Mittel korrigiert [K]** | **Wärme-ableitung [kJ]** |
|---|---|---|---|---|---|---|---|---|
| **min** | **2A P1 [K]** | **2A P2 [K]** | **2B P1 [K]** | **2B P2 [K]** | **Mittel [K]** | | | |
| 1 | 1.1 | 0.1 | 0.3 | 0.8 | 0.57 | 0.05 | 0.52 | 1.57 |
| 2 | 1.4 | 0.2 | 0.5 | 1.2 | 0.83 | 0.10 | 0.72 | 2.17 |
| 5 | 2.2 | 0.7 | 1.1 | 2.1 | 1.53 | 0.26 | 1.27 | 3.81 |
| 7 | 3.1 | 1.1 | 1.5 | 2.6 | 2.08 | 0.36 | 1.72 | 5.15 |
| 10 | 4.0 | 1.6 | 2.2 | 3.4 | 2.80 | 0.51 | 2.29 | 6.86 |
| 15 | 4.8 | 2.6 | 3.2 | 4.5 | 3.78 | 0.77 | 3.01 | 9.02 |
| 20 | 6.2 | 3.7 | 4.4 | 5.4 | 4.93 | 1.02 | 3.90 | 11.70 |
| 25 | 7.5 | 4.7 | 5.4 | 6.3 | 5.98 | 1.28 | 4.70 | 14.09 |
| 30 | 8.4 | 5.8 | 6.3 | 7.3 | 6.95 | 1.54 | 5.41 | **16.24** |

### Prüfkörper 3A/3B

Die Prüfkörper 3A und 3B wurden entsprechend den Ausführungen unter Prüfkörper 2A/2B mit einer Epoxidharzbeschichtung unter Einstreuung der gleichen Menge des Zusatzstoffgemisches erstellt, wobei auf eine Versiegelung verzichtet wurde. Die gemessenen, gemittelten und korrigierten Mittelwerte sind in Tabelle 3 aufgeführt.

**Tabelle 3**

| | **Temperaturverlust** | | | | | **Heizblock-verlust [K]** | **Mittel korrigiert [K]** | **Wärme-ableitung [kJ]** |
|---|---|---|---|---|---|---|---|---|
| **min** | **3A P1 [K]** | **3A P2 [K]** | **3B P1 [K]** | **3B P2 [K]** | **Mittel [K]** | | | |
| 1 | 0.2 | 0.3 | 0.4 | 0.3 | 0.30 | 0.05 | 0.25 | 0.75 |
| 2 | 0.4 | 0.6 | 0.6 | 0.5 | 0.53 | 0.10 | 0.42 | **1.27** |
| 5 | 0.9 | 1.1 | 1.1 | 1.0 | 1.03 | 0.26 | 0.77 | 2.31 |
| 7 | 1.2 | 1.5 | 1.4 | 1.3 | 1.35 | 0.36 | 0.99 | 2.97 |
| 10 | 1.7 | 2.2 | 2.0 | 1.8 | 1.93 | 0.51 | 1.41 | 4.24 |
| 15 | 2.6 | 3.2 | 3.0 | 2.6 | 2.85 | 0.77 | 2.08 | 6.25 |
| 20 | 3.6 | 4.2 | 3.9 | 3.7 | 3.85 | 1.02 | 2.83 | 8.48 |
| 25 | 4.5 | 5.2 | 4.9 | 4.7 | 4.83 | 1.28 | 3.55 | 10.64 |
| 30 | 5.4 | 6.1 | 6.0 | 5.6 | 5.78 | 1.54 | 4.24 | **12.72** |

### Prüfkörper 4A/4B

Die Prüfkörper 4A und 4B zeichnen sich durch ein Verbundbelagssystem mit einer Industrie PU-Beschichtung als Belagsbaustoffgemisch aus, welche mit einer Einstreuung des Zusatzstoffgemisches versehen wurde. Dabei wurde Zusatzstoffgemisch und PU-Beschichtung im Massenverhältnis 1:1 aufgebracht und ein 3 mm dickes Verbundbelagssystem erstellt. Anschliessend wurde auch diese Zusammensetzung PU-Beschichtung/Zusatzstoffgemisch mit einer Versiegelung versehen. Die gemessenen, gemittelten und korrigierten Mittelwerte sind in Tabelle 4 aufgeführt.

**Tabelle 4**

| | **Temperaturverlust** | | | | | **Heizblockverlust [K]** | **Mittel korrigiert [K]** | **Wärmeableitung [kJ]** |
|---|---|---|---|---|---|---|---|---|
| **min** | **4A P1 [K]** | **4A P2 [K]** | **4B P1 [K]** | **4B P2 [K]** | **Mittel [K]** | | | |
| 1 | 0.3 | 0.4 | 1.3 | 0.9 | 0.72 | 0.05 | 0.67 | 2.02 |
| 2 | 0.6 | 0.6 | 1.6 | 1.2 | 1.00 | 0.10 | 0.90 | **2.69** |
| 5 | 1.0 | 1.3 | 2.3 | 2.1 | 1.68 | 0.26 | 1.42 | 4.26 |
| 7 | 1.3 | 1.8 | 2.7 | 2.6 | 2.10 | 0.36 | 1.74 | 5.22 |
| 10 | 2.1 | 2.3 | 3.2 | 3.2 | 2.70 | 0.51 | 2.19 | 6.56 |
| 15 | 3.0 | 3.5 | 4.3 | 4.3 | 3.78 | 0.77 | 3.01 | 9.02 |
| 20 | 4.2 | 4.4 | 5.3 | 5.4 | 4.83 | 1.02 | 3.80 | 11.40 |
| 25 | 5.3 | 5.6 | 6.2 | 6.5 | 5.90 | 1.28 | 4.62 | 13.86 |
| 30 | 6.3 | 6.4 | 7.1 | 7.3 | 6.78 | 1.54 | 5.24 | **15.72** |

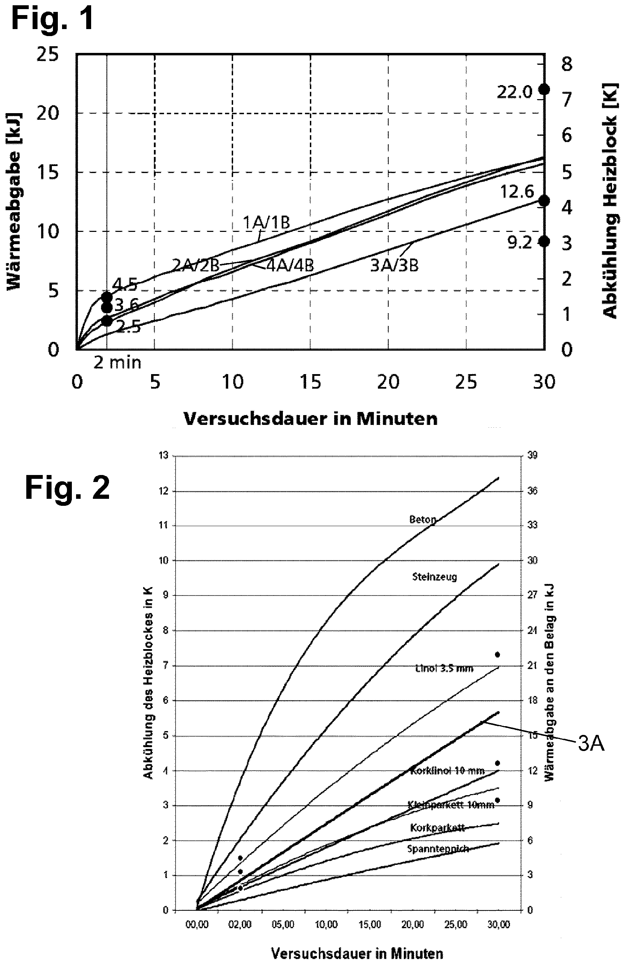

Durch Analyse der Wärmeableitungswerte nach 2 und 30 Minuten können die untersuchten Prüfkörper bzw. Verbundbelagssysteme gemäss der Norm SIA 252:2002 für fugenlose Industrieböden klassiert werden. Verbundbelagssysteme, welche nach zwei Minuten einen Wärmeverlust kleinergleich 3.6 kJ und nach dreissig Minuten einen Wärmeverlust kleinergleich 12.6 kJ aufweisen, werden als gut wärmeschützende Beläge klassiert. Verbundbelagssysteme, welche nach zwei Minuten einen Wärmeverlust kleinergleich 4.5 kJ und nach dreissig Minuten einen Wärmeverlust kleinergleich 22.0 kJ aufweisen, werden als wärmeschützende Beläge klassiert. Die Eckpunkte der Klassierung sind in der Figur 1 in durch entsprechende Punkte nach zwei Minuten bzw. 30 Minuten Abkühlungszeit markiert.

Die Messungen an den Prüfkörpern 2A/2B, 3A/3B und 4A/4B sind damit als wärmeschützende Verbundbelagssysteme zu klassieren.

### Figur 2

In Figur 2 ist beispielhaft eine Messkurve der Wärmeableitmessung am Prüfkörper 3A gezeigt, wobei die gemessenen Rohdaten der Abkühlung des Kupferblockes und die daraus berechnete Wärmeabgabe an das Verbundbelagssystem gegen die Zeit aufgetragen sind. Die Vergleichsmessung der Wärmeabgabe des Kupferblockes an die Umgebung ist hier nicht berücksichtig worden.

Das Verbundbelagssystem, umfassend eine Epoxidharzbeschichtung als Belagsbaustoffgemisch und eine gleiche Menge eines Zusatzstoffgemisches in passender Zusammensetzung, erreicht eine geringere Wärmeabgabe als die Vergleichsmessungen an Belagssystemen aus Beton, Steinzeug und Linol in einer Dicke von 3.5mm. Die Klassierungswerte sind in Figur 2 als Punkte eingefügt, wodurch einfach ersichtlich ist. Die beiden untersten Markierungen für vorzüglich wärmeschützende Belagsysteme, kleinergleich 2.5 kJ nach zwei Minuten und kleinergleich 9.2 kJ nach dreissig Minuten werden nur von wesentlich dickeren Belagssystemen wie Korklinol, Kleinparkett mit 10mm Dicke, sowie Korkparkett und Spannteppich erreicht, wobei diese Isolationsschichten nicht als Teil eines fugenlos auftragbaren Belagssystems sind.

## Patentansprüche

1. Zusatzstoffgemisch zur Zugabe in ein Belagsbaustoffgemisch zur Bildung eines Verbundbelagssystems für den Boden-, Wand- oder Fassadenbereich,
wobei das Zusatzstoffgemisch einen Anteil zwischen 50 Gew.% und 95 Gew.% Muskovit-Glimmer umfasst und das Zusatzstoffgemisch in Pulver- oder Granulatform vorliegt,
**dadurch gekennzeichnet, dass**
der Anteil Muskovit-Glimmer im Zusatzstoffgemisch aus Muskovit-Glimmer mit mindestens zwei verschiedenen Korngrössen
aus einem ersten Teil Partikel mit einer feinen Korngrösse grösser 150 µm und kleiner 300µm und einem zweiten Teil einer mittelfeinen Korngrösse grösser 400µm und kleiner 800 µm oder
aus einem ersten Teil Partikel mit einer feinen Korngrösse grösser 150 µm und kleiner 300µm, einem zweiten Teil Partikel einer mittelfeinen Korngrösse grösser 400 µm und kleiner 800 µm und einem dritten Teil Partikel mit einer groben Korngrösse mit mittleren Partikeldurchmessern grössergleich 800 µm
oder
aus einem zweiten Teil einer mittelfeinen Korngrösse grösser 400µm und kleiner 800 µm und einem dritten Teil einer groben Korngrösse mit mittleren Partikeldurchmessern grössergleich 800 µm zusammengesetzt ist.

2. Zusatzstoffgemisch nach Anspruch 1, wobei der Anteil Muskovit-Glimmer im Zusatzstoffgemisch zusätzlich einen dritten Teil mit Partikeln mit einer groben Korngrösse mit mittleren Partikeldurchmessern grössergleich 800 µm aufweist.

3. Zusatzstoffgemisch (2) nach einem der vorhergehenden Ansprüche, wobei das Zusatzstoffgemisch (2) zusätzlich Additive, in Form von Verlaufsoptimierern, Stabilisierern gegen Entmischung, Brandschutzkomponenten, Beschichtungsstabilisierern und/oder Weisspigmenten aufweist.

4. Zusatzstoffgemisch (2) nach einem der der vorhergehenden Ansprüche, wobei das Zusatzstoffgemisch (2) zusätzlich Additive, in Form von Bindemitteln, beispielsweise Portlandzement und/oder Füll- und Bindemittel, beispielsweise Calciumcarbonat aufweist.

5. Verbundbelagssystem für den Boden-, Wand- oder Fassadenbereich, gebildet aus einem fliessfähigen oder spachtelfähigem Belagsbaustoffgemisch,
**dadurch gekennzeichnet, dass**
ein Zusatzstoffgemisch gemäss einem der vorhergehenden Ansprüche, umfassend mindestens einen Anteil von Muskovit-Glimmer, dem Belagsbaustoffgemisch zugemischt oder in das Belagsbaustoffgemisch eingestreut ist, sodass in resultierenden Verbundbelagssystemen, umfassend das Belagsbaustoffgemisch und das Zusatzstoffgemisch
ein Massenanteil zwischen 6 Gew.% und 50 Gew.% Muskovit-Glimmer mit mindestens zwei verschiedenen Korngrössen resultiert.

6. Verbundbelagssystem gemäss Anspruch 5, wobei als Belagsbaustoffgemisch ein mineralisches Belagsgemisch, wie Hartbeton-, Zement-Kunstharz-, Vermörtelungs-, Steinholz-, Magnesia- oder ein Anhydrit-Belagsgemisch,
gewählt ist,
welchem derart viel Zusatzstoffgemisch zugesetzt ist, dass ein Massenanteil des Muskovit-Glimmers zwischen 6 Gew.% und 20 Gew.% des resultierenden Verbundbelagssystems erreicht ist.

7. Verbundbelagssystem gemäss Anspruch 5, wobei als Belagsbaustoffgemisch ein Hartbetonbelagsgemisch gewählt ist,
welchem derart viel Zusatzstoffgemisch zugesetzt ist, dass ein Massenanteil des Muskovit-Glimmers kleinergleich 10 Gew.% des resultierenden Verbundbelagssystems erreicht ist.

8. Verbundbelagssystem gemäss Anspruch 5, wobei als Belagsbaustoffgemisch
ein Kunstharz- oder Kunststoffe umfassendes Belagsgemisch gewählt ist,
welchem derart viel Zusatzstoffgemisch zugesetzt ist, dass ein Massenanteil des Muskovit-Glimmers zwischen 12 Gew.% und 50 Gew.% des resultierenden Verbundbelagssystems erreicht ist.

9. Verbundbelagssystem gemäss Anspruch 5, wobei als Belagsbaustoffgemisch
ein PU-Belagsgemisch oder ein Epoxidbelagsgemisch gewählt ist,
welchem derart viel Zusatzstoffgemisch zugesetzt ist, dass ein Massenanteil des Muskovit-Glimmers zwischen 40 Gew.% und 50 Gew.% des resultierenden Verbundbelagssystems erreicht ist.

10. Verfahren zur Herstellung eines Verbundbelagssystems für den Boden-, Wand- oder Fassadenbereich, umfassend ein Belagsbaustoffgemisch und ein Zusatzstoffgemisch gemäss einem der Ansprüche 1 bis 4,
**gekennzeichnet durch**
- Vermischen des Belagsbaustoffgemisches mit dem Zusatzstoffgemisch oder
- Einstreuen des Zusatzstoffgemisches in das Belagsbaustoffgemisch nach Ausbringung, Verstreichen und/oder Verspachteln des Belagsbaustoffgemisches ,
wobei das Zusatzstoffgemisch mindestens 50 Gew.% Muskovit-Glimmer umfasst, sodass das resultierende Verbundbelagssystem zwischen 6 Gew.% und 50 Gew.% Muskovit-Glimmer aufweist.

## Claims

1. An additive mixture for adding to a surfacing material mixture to create a composite surfacing system for the floor, wall or façade area,
wherein the additive mixture comprises a fraction of between 50 and 95 % by weight muscovite mica and the additive mixture exists in powder or granulate form,
**characterized in that**
the muscovite mica fraction in the additive mixture is composed of muscovite mica with at least two different grain sizes
of a first part with particles with a fine grain size greater than 150 µm and smaller than 300 µm and a second part of a medium-fine grain size greater than 400 µm and smaller than 800 µm
or
of a first part with particles with a fine grain size greater than 150 µm and smaller than 300 µm, a second part of particles with a medium-fine grain size greater than 400 µm and smaller than 800 µm and a third part of particles with a coarse grain size with mean particle diameters of a size equal to 800 µm
or
of a second part with a medium-fine grain size greater than 400 µm and smaller than 800 µm and a third part with a coarse grain size with mean particle diameters of a size equal to 800 µm.

2. The additive mixture according to claim 1, wherein the fraction of muscovite mica in the additive mixture has, in addition, a third part with particles with a coarse grain size with mean particle diameters of a size equal to 800 µm.

3. The additive mixture (2) according to one of the preceding claims, wherein the additive mixture (2) additionally comprises additives in the form of process optimizers, stabilizers to prevent decomposition, fire protection components, coating stabilizers and/or white pigments.

4. The additive mixture (2) according to one of the preceding claims, wherein the additive mixture (2) additionally comprises additives in the form of binding agents, for example Portland cement and/or filling and binding agents, for example calcium carbonate.

5. A composite surfacing system for the floor, wall or façade area, formed from a surfacing material mixture that is flowable or can be trowelled,
**characterized in that**
an additive mixture according to one of the preceding claims comprising at least one fraction of muscovite mica added to the surfacing material mixture or interspersed in the surfacing material mixture, so that in resulting composite surfacing systems comprising the surfacing material mixture and the additive mixture
a mass fraction of between 6 and 50 % by weight muscovite mica with at least two different grain sizes results.

6. The composite surfacing system according to claim 5, wherein a mineral surfacing mixture such as hard concrete, cement-synthetic resin, cement stabilization, xylolite, magnesium or an anhydrite surfacing mixture is selected as the surfacing building material mixture,
to which an additive mixture is added in such a quantity that a mass fraction of the muscovite mica of between 6 and 20 % by weight of the resulting composite surfacing system is achieved.

7. The composite surfacing system according to claim 5, wherein a hard concrete surfacing mixture is selected as the surfacing material mixture,
to which an additive mixture is added in such a quantity that a mass fraction of the muscovite mica is smaller than or equal to 10 % by weight of the resulting composite surfacing system.

8. The composite surfacing system according to claim 5, wherein
a surfacing mixture comprising a synthetic resin or plastics material is selected as the surfacing material mixture,
to which an additive mixture is added in such a quantity that a mass fraction of the muscovite mica of between 12 and 50 % by weight of the resulting composite surfacing system is achieved.

9. The composite surfacing system according to claim 5, wherein
a PU surfacing mixture or an epoxy surfacing mixture is selected as the surfacing material mixture,
to which an additive mixture is added in such a quantity that a mass fraction of the muscovite mica of between 40 and 50 % by weight of the resulting composite surfacing system is achieved.

10. A method for producing a composite surfacing system for the floor, wall or façade area comprising a surfacing material mixture and an additive mixture according to one of claims 1 to 4,
**characterized by**
- mixing of the surfacing material mixture with the additive mixture or
- interspersing of the additive mixture into the surfacing material mixture following the preparation, spreading and/or filling of the surfacing material mixture, wherein the additive mixture comprises at least 50 % by weight muscovite mica, so that the resulting composite surfacing system comprises between 6 and 50 % by weight muscovite mica.

## Revendications

1. Mélange d'adjuvants, destiné à être ajouté dans un mélange de matériau de revêtement, pour créer un système de revêtement composite pour le secteur des sols, des murs ou des façades, le mélange d'adjuvants comprenant une proportion comprise entre 50 % en poids et 95 % en poids de mica muscovite et le mélange d'adjuvants se présentant sous forme pulvérulente ou granuleuse, **caractérisé en ce que**
la proportion de mica muscovite dans le mélange d'adjuvants se compose de mica muscovite présentant au moins deux différentes granulométries en une première part de particules de granulométrie fine, supérieure à 150 µm et inférieure à 300 µm et en une deuxième part d'une granulométrie moyenne, supérieure à 400 µm et inférieure à 800 µm ou
en une première part de particules d'une granulométrie fine, supérieure à 150 µm et inférieure à 300 µm, en une deuxième part de particules d'une granulométrie moyenne, supérieure à 400 µm et inférieure à 800 µm et en une troisième part de particules d'une granulométrie grossière, présentant des diamètres de particules moyens, supérieurs ou égaux à 800 µm
ou
en une deuxième part d'une granulométrie moyenne, supérieure à 400 µm et inférieure à 800 µm et en une troisième part de granulométrie grossière, présentant des diamètres de particules moyens, supérieurs ou égaux à 800 µm.

2. Mélange d'adjuvants selon la revendication 1, la proportion de mica muscovite dans le mélange d'adjuvants comportant en supplément une troisième part, avec des particules d'une granulométrie grossière, présentant des diamètres de particules moyens, supérieurs ou égaux à 800 µm.

3. Mélange d'adjuvants (2) selon l'une quelconque des revendications précédentes, le mélange d'adjuvants (2) comportant en supplément des additifs, sous la forme de fluidifiants, de stabilisateurs anti-séparateurs, de composants ignifuges, de stabilisateurs de revêtement et/ou de pigments blancs.

4. Mélange d'adjuvants (2) selon l'une quelconque des revendications précédentes, le mélange d'adjuvants (2) comportant en supplément des additifs, sous la forme d'agents liants, par exemple de ciment de Portland et/ou d'agents de charge et de liaison, par exemple de carbonate de calcium.

5. Système de revêtement composite pour le secteur des sols, des murs ou des façades, formé d'un mélange de matériau de revêtement fluide ou spatulable, **caractérisé**
**en ce qu'**on amalgame avec le mélange de matériau de revêtement un mélange d'adjuvants selon l'une quelconque des revendications précédentes, comprenant au moins une proportion de mica muscovite ou on le saupoudre dans le mélange de matériau de revêtement, de sorte à obtenir dans des systèmes de revêtement composites résultants, comprenant le mélange de matériau de revêtement et le mélange d'adjuvants
une part en masse comprise entre 6 % en poids et 50 % en poids de mica muscovite présentant au moins trois granulométries différentes.

6. Système de revêtement composite selon la revendication 5, en tant que mélange de matériau de revêtement étant choisi un mélange de revêtement minéral, tel qu'un mélange de revêtement en béton dur, en ciment/résine synthétique, un mélange de revêtement au mortier, en ciment de bois, en magnésie ou en anhydrite, auquel on rajoute une quantité de mélange d'adjuvants telle, qu'on obtient une part en masse du mica muscovite comprise entre 6 % en poids et 20 % en poids du système de revêtement composite résultant.

7. Système de revêtement composite selon la revendication 5, en tant que mélange de matériau de revêtement étant choisi un mélange béton dur, auquel on rajoute une quantité de mélange d'adjuvants telle, qu'on obtient une part en masse du mica muscovite inférieure ou égale à 10 % en poids du système de revêtement composite résultant.

8. Système de revêtement composite selon la revendication 5, en tant que mélange de matériau de revêtement étant choisi un mélange de revêtement comprenant de la résine synthétique ou une matière plastique, auquel on rajoute une quantité de mélange d'adjuvants telle, qu'on obtient une part en masse du mica muscovite comprise entre 12 % en poids et 50 % en poids du système de revêtement composite résultant.

9. Système de revêtement composite selon la revendication 5, en tant que mélange de matériau de revêtement étant choisi un mélange de revêtement en PU ou un mélange de revêtement époxy, auquel on rajoute une quantité de mélange d'adjuvants telle, qu'on obtient une part en masse du mica muscovite comprise entre 40 % en poids et 50 % en poids du système de revêtement composite résultant.

10. Procédé, destiné à fabriquer un système de revêtement composite pour le secteur des sols, des murs ou des façades, comprenant un mélange de matériau de revêtement et un mélange d'adjuvants selon l'une quelconque des revendications 1 à 4,
**caractérisé par** les opérations consistant à
- amalgamer le mélange de matériau de revêtement avec le mélange d'adjuvants ou
- saupoudrer le mélange d'adjuvant dans le mélange de matériau de revêtement après avoir épandu, appliqué au pinceau et/ou spatulé le mélange de matériau de revêtement, le mélange d'adjuvants comprenant au moins 50 % en poids de mica muscovite, de sorte que le système de revêtement composite comporte entre 6 % en poids et 50 % en poids de mica muscovite.
